(19) Europäisches Patentamt
European Patent Office
Office européen des brevets

(11) **EP 3 398 980 B1**

(12) **EUROPEAN PATENT SPECIFICATION**

(45) Date of publication and mention
of the grant of the patent:
**16.12.2020 Bulletin 2020/51**

(21) Application number: **16881529.8**

(22) Date of filing: **27.10.2016**

(51) Int Cl.:
*C08G 18/65* (2006.01)      *C08G 18/00* (2006.01)
*C08G 18/10* (2006.01)      *C08G 18/44* (2006.01)
*C08G 18/48* (2006.01)      *C08L 75/04* (2006.01)
*D06M 15/564* (2006.01)      *C08G 18/75* (2006.01)
*C08G 18/12* (2006.01)      *C08L 75/06* (2006.01)

(86) International application number:
**PCT/JP2016/081945**

(87) International publication number:
**WO 2017/115549 (06.07.2017 Gazette 2017/27)**

(54) **AQUEOUS-DISPERSION TYPE POLYCARBONATE-BASED POLYURETHANE RESIN COMPOSITION, TEXTILE PRODUCT TREATED WITH SAME, AND PROCESS FOR PRODUCING AQUEOUS-DISPERSION TYPE POLYCARBONATE-BASED POLYURETHANE RESIN COMPOSITION**

AUF POLYCARBONAT IN FORM EINER WÄSSRIGEN DISPERSION BASIERENDE POLYURETHANHARZZUSAMMENSETZUNG, BEHANDELTES TEXTILPRODUKT DAMIT UND VERFAHREN ZUR HERSTELLUNG EINER AUF POLYCARBONAT IN FORM EINER WÄSSRIGEN DISPERSION BASIERENDEN POLYURETHANHARZZUSAMMENSETZUNG

COMPOSITION DE RÉSINE DE POLYURÉTHANE À BASE DE POLYCARBONATE DE TYPE DISPERSION AQUEUSE, PRODUIT TEXTILE TRAITÉ AVEC CELLE-CI, ET PROCÉDÉ DE PRODUCTION DE COMPOSITION DE RÉSINE DE POLYURÉTHANE À BASE DE POLYCARBONATE DE TYPE DISPERSION AQUEUSE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(30) Priority: **28.12.2015 JP 2015256325**

(43) Date of publication of application:
**07.11.2018 Bulletin 2018/45**

(73) Proprietor: **Nicca Chemical Co., Ltd.**
**Fukui-shi, Fukui 910-8670 (JP)**

(72) Inventors:
• **NANBOKU, Naoki**
**Fukui-shi**
**Fukui 910-8670 (JP)**

• **KIBE, Yoshinobu**
**Fukui-shi**
**Fukui 910-8670 (JP)**

(74) Representative: **Hoffmann Eitle**
**Patent- und Rechtsanwälte PartmbB**
**Arabellastraße 30**
**81925 München (DE)**

(56) References cited:
**JP-A- 2005 213 303      JP-A- 2014 185 320**
**JP-A- 2014 185 320      US-A1- 2015 291 724**

Remarks:
The file contains technical information submitted after the application was filed and not included in this specification

**Description**

[Technical Field]

The present invention relates to a water-dispersible polycarbonate-based polyurethane resin composition, a fiber product treated by using the same, and a method for producing a water-dispersible polycarbonate-based polyurethane resin composition.

[Background Art]

Water-dispersible polyurethane resins are used as polymer-processing agents in a water solvent, and exhibit characteristics such as low pollution characteristics, safety, and ease of handling. In addition, the water-dispersible polyurethane resins have been used as highly functional aqueous dispersions for various fiber products, because of their excellent durability, chemical resistance, wear resistance, and the like. Moreover, the water-dispersible polyurethane resins are expected to be increasingly important also in the future, because the use of a polycarbonate-based polyol as a polyol component makes it possible to provide properties such as excellent strength, light resistance, heat resistance, hydrolysis resistance, and oil resistance.

However, a polyurethane resin obtained by using a polycarbonate-based polyol as a main component of polyols can provide various fiber materials with performances as described above, but the texture of a fiber product to which the polyurethane resin is attached is prone to be very hard and paper-like with low resilient feel, and tends to be unsuitable for practical use.

In order to solve these problems, for example, Japanese Unexamined Patent Application Publication Hei 10-120757 (PTL 1) discloses a water-dispersible polycarbonate-based polyurethane resin composition capable of providing a fiber product with a soft texture having resilient feel by using at least two polyisocyanates as polyisocyanate components, while retaining characteristics of polycarbonate. However, there has been a demand for a polyurethane resin composition capable of balancing both softness and resilient feel at higher levels. In addition, since at least two polyisocyanates are used, the water-dispersible polycarbonate-based polyurethane resin composition described in PTL 1 has problems such as complicated management and difficulty in stable production because of difficulty in controlling the reaction during production.

International Publication No. WO2014-104134 (PTL 2) discloses that a polyurethane produced by using a specific polycarbonate diol has such a feature that the balance among chemical resistance, low-temperature characteristics, heat resistance, softness, and elastic recoverability is excellent. In addition, PTL 2 also discloses that an aqueous polyurethane emulsion is prepared by forming a prepolymer by mixing a compound having at least one hydrophilic functional group and at least two groups reactive with isocyanate during producing the prepolymer by reacting polyols comprising a polycarbonate diol with a polyisocyanate in excess, followed by a step of forming a neutral salt of the hydrophilic functional group, an emulsification step by adding water, and a chain extension reaction step, and that thus obtained aqueous polyurethane emulsion has softness and can be used more effectively than conventional aqueous polyurethane emulsions. However, based on study conducted by the present inventors, fiber products treated with the aqueous polyurethane emulsion described in PTL 2 were insufficient in simultaneously achieving both softness and resilient feel.

[Citation List]

[Patent Literature]

[PTL 1] Japanese Unexamined Patent Application Publication Hei 10-120757

[PTL 2] International Publication No. WO2014-104134 (corresponding to US 2015/291724A1)

JP 2014-185320A describes a provide a polycarbonate diol to be used as a raw material of a polyurethane having a good balance of chemical resistance and low-temperature properties, and a polyurethane using the same.

[Summary of Invention]

[Technical Problem]

The present invention has been made in view of the above-described problems of the conventional techniques, and an object of the present invention is to provide a water-dispersible polyurethane resin composition which, although being a water-dispersible polyurethane resin obtained by using a polycarbonate diol, makes it possible to provide a fiber base material with soft texture and resilient feel, while overcoming the hard texture, which can be said to be a disadvantage of fiber products treated with conventional polycarbonate-based polyurethane resins, and further which makes it possible to sufficiently retain the soft texture and the resilient feel even after dyeing because neither fracture nor detachment of the resin due to heat or a force of crumpling or the like occurs even when the obtained fiber product is subjected to a dyeing treatment because of a good dyeing durability.

Another object of the present invention is to provide a method for producing the water-dispersible polyurethane resin composition.

[Solution to Problem]

The present inventors have conducted intensive study to solve the above-described problems, and consequently have found that when a fiber base material is treated by using a water-dispersible polycarbonate-based polyurethane resin composition prepared by using, as raw materials, polyols comprising a polycarbonate diol containing a specific structural unit and a polyvalent alcohol containing only hydroxyl groups as functional groups, a fiber product having soft texture and resilient feel can be obtained, and further that even when the fiber product is subjected to a dyeing treatment, the soft texture and the resilient feel are retained. These findings have led to the completion of the present invention.

Specifically, a water-dispersible polycarbonate-based polyurethane resin composition of the present invention is obtained by chain extension of a urethane prepolymer with a polyamine compound, wherein
the urethane prepolymer has an isocyanate group at a terminal and is a reaction product of polyols
with an organic polyisocyanate,
wherein the polyols comprise a decanediol-derived polycarbonate diol and a polyvalent alcohol,
wherein the decanediol-derived polycarbonate diol contains a structural unit derived from 1,10-decanediol, and the polyvalent alcohol contains only hydroxyl groups as functional groups and has a molecular weight of 400 or lower, and the polyamine compound contains two or more amino groups of at least one type selected from the group consisting of primary amino groups and secondary amino groups in a single molecule.

In the water-dispersible polycarbonate-based polyurethane resin composition of the present invention, a ratio of the polycarbonate diol containing the structural unit derived from 1,10-decanediol relative to all the polyols is preferably 50 to 99% by mass. In addition, the polyols preferably further comprise a polyether-based polyol, and, in this case, a ratio of oxyethylene groups relative to all the polyols is more preferably 0.5 to 10% by mass.

A fiber product of the present invention comprises:

a fiber base material; and
a polycarbonate-based polyurethane resin which is attached to the fiber base material and which is derived from the water-dispersible polycarbonate-based polyurethane resin composition of the present invention.

A method for producing a water-dispersible polycarbonate-based polyurethane resin composition of the present invention comprises the steps of:

obtaining a urethane prepolymer having an isocyanate group at a terminal by reacting polyols with an organic polyisocyanate,
wherein the polyols comprise a decanediol-derived polycarbonate diol and a polyvalent alcohol,
wherein the decanediol-derived polycarbonate diol contains a structural unit derived from 1,10-decanediol, and the polyvalent alcohol contains only hydroxyl groups as functional groups and has a molecular weight of 400 or lower;
dispersing the urethane prepolymer in water by emulsification in the presence of an emulsifier; and
subjecting the urethane prepolymer dispersed by emulsification to chain extension with a polyamine compound containing two or more amino groups of at least one type selected from the group consisting of primary amino groups and secondary amino groups in a single molecule.

In the method for producing a water-dispersible polycarbonate-based polyurethane resin composition of the present invention, the polyols preferably further comprise a polyether-based polyol. In addition, 0.5 to 10 parts by mass of the emulsifier is preferably used relative to 100 parts by mass of the urethane prepolymer in the step of dispersing the urethane prepolymer by emulsification.

A method for producing a fiber product of the present invention comprises the steps of:

producing a water-dispersible polycarbonate-based polyurethane resin composition by the production method of the present invention; and
attaching a polycarbonate-based polyurethane resin to a fiber base material by using the water-dispersible polycarbonate-based polyurethane resin composition.

[Advantageous Effects of Invention]

The water-dispersible polycarbonate-based polyurethane resin composition of the present invention makes it possible to provide a fiber base material with soft texture and resilient feel, although being a water-dispersible polyurethane resin composition obtained by using a polycarbonate diol. In addition, because of the good dyeing durability, the water-dispersible polycarbonate-based polyurethane resin composition of the present invention enables the obtained fiber product to sufficiently retain the soft texture and the resilient feel even after dyeing, because neither fracture nor detachment of the resin due to heat or a force of crumpling or the like occurs when a dyeing treatment is conducted.

[Description of Embodiments]

Hereinafter, the present invention will be described in detail based on preferred embodiments thereof.

<Water-Dispersible Polycarbonate-Based Polyurethane Resin Composition>

A water-dispersible polycarbonate-based polyurethane resin composition of the present invention is obtained by chain extension of a urethane prepolymer with a polyamine compound, wherein
the urethane prepolymer has an isocyanate group at a terminal and is a reaction product of polyols with an organic polyisocyanate, wherein the polyols comprise a decanediol-derived polycarbonate diol and a polyvalent alcohol,
wherein the decanediol-derived polycarbonate diol contains a structural unit derived from 1,10-decanediol, and the polyvalent alcohol contains only hydroxyl groups as functional groups and has a molecular weight of 400 or lower, and
the polyamine compound contains two or more amino groups of at least one type selected from the group consisting of primary amino groups and secondary amino groups in a single molecule.

[Polyols]

The polyols used in the present invention comprise a polycarbonate diol containing a structural unit derived from 1,10-decanediol (hereinafter, referred to as "decanediol-derived polycarbonate diol") and a polyvalent alcohol containing only hydroxyl groups as functional groups and having a molecular weight of 400 or lower.

The decanediol-derived polycarbonate diol used in the present invention has a number average molecular weight of preferably 500 to 4500, and more preferably 1800 to 3400. If the number average molecular weight of the decanediol-derived polycarbonate diol is lower than the lower limit, the softness, resilient feel, and dyeing durability of a fiber product to be obtained tend to deteriorate. Meanwhile, if the number average molecular weight exceeds the upper limit, the decanediol-derived polycarbonate diol tends to have an excessively high viscosity and hence tends to be difficult to handle.

In addition, the decanediol-derived polycarbonate diol used in the present invention has a hydroxyl value (OHV) of preferably 25 to 220 mg KOH/g, more preferably 33 to 120 mg KOH/g, and particularly preferably 33 to 63 mg KOH/g. If the hydroxyl value of the decanediol-derived polycarbonate diol is lower than the lower limit, the decanediol-derived polycarbonate diol tends to have an excessively high viscosity and hence tends to be difficult to handle. Meanwhile, if the hydroxyl value exceeds the upper limit, the softness, resilient feel, and dyeing durability of a fiber product to be obtained tend to deteriorate.

Moreover, the decanediol-derived polycarbonate diol used in the present invention has a viscosity at 60°C of preferably 700 to 40000 mPa·s, and more preferably 5000 to 40000 mPa·s. If the viscosity at 60°C of the decanediol-derived polycarbonate diol is lower than the lower limit, the softness, resilient feel, and dyeing durability of a fiber product to be obtained tend to deteriorate. Meanwhile, if the viscosity exceeds the upper limit, the decanediol-derived polycarbonate diol has an excessively high viscosity, and hence tends to be difficult to handle.

In addition, the decanediol-derived polycarbonate diol used in the present invention has a flash point of preferably 220 to 280°C, and more preferably 245 to 270°C. If the flash point of the decanediol-derived polycarbonate diol is lower than the lower limit, the softness, resilient feel, and dyeing durability of a fiber product to be obtained tend to deteriorate. Meanwhile, if the flash point exceeds the upper limit, the decanediol-derived polycarbonate diol tends to have an excessively high viscosity, and hence tends to be difficult to handle.

Moreover, the decanediol-derived polycarbonate diol used in the present invention preferably has a melting point of 40 to 60°C. If the melting point of the decanediol-derived polycarbonate diol is lower than the lower limit, the softness, resilient feel, and dyeing durability of a fiber product to be obtained tend to deteriorate. Meanwhile, if the melting point exceeds the upper limit, the decanediol-derived polycarbonate diol tends to have an excessively high viscosity, and hence tends to be difficult to handle.

In addition, the decanediol-derived polycarbonate diol used in the present invention preferably has an acid value (AV) of 0.5 mg KOH/g or less. If the acid value of the decanediol-derived polycarbonate diol exceeds the upper limit, the softness, resilient feel, and dyeing durability of a fiber product to be obtained tend to deteriorate.

In the present invention, decanediol-derived polycarbonate diols manufactured by Mitsubishi Chemical Corporation under the trade name of "BENEBiOL™ NL3010DB, NL2010DB, or NL1010DB," and the like can be used as the decanediol-derived polycarbonate diol.

The ratio of the decanediol-derived polycarbonate diol relative to all the polyols is preferably 50 to 99% by mass, and more preferably 70 to 99% by mass, from the viewpoints of the softness, resilient feel, and dyeing durability of a fiber product to be obtained.

Examples of the polyvalent alcohol containing only hydroxyl groups as functional groups and having a molecular weight of 400 or lower used in the present invention include ethylene glycol, propylene glycol, diethylene glycol, 1,4-butanediol, 1,6-hexanediol, nonanediol, neopentyl glycol, trimethylolpropane, pentaerythritol, sorbitol, and the like. One of such polyvalent alcohols containing only hydroxyl groups as functional groups and having a molecular weight of 400 or lower may be used alone, or two or more thereof may be used in combination.

In the present invention, it is also possible to use the polyvalent alcohol containing only hydroxyl groups as functional groups and having a molecular weight of 400 or lower in combination with a polyvalent alcohol having another functional group and having a molecular weight of 400 or lower. Examples of the polyvalent alcohol having another functional group and having a molecular weight of 400 or lower include polyvalent alcohols containing a carboxyl group and two or more hydroxyl groups and having a molecular weight of 400 or lower such as 2,2-dimethylolpropionic acid, 2,2-dimethylolbutanoic acid, 2,2-dimethylolheptanoic acid, and 2,2-dimethyloloctanoic acid. When such a polyvalent alcohol containing a carboxyl group and two or more hydroxyl groups and having a molecular weight of 400 or lower is used, the polyvalent alcohol may also be used with the carboxyl group neutralized, as appropriate.

In the present invention, from the viewpoint of sufficient balance of the softness and the resilient feel of a fiber product to be obtained, the amount of the polyvalent alcohol containing only hydroxyl groups as functional groups and having a molecular weight of 400 or lower contained is preferably 50% by mole or more relative to all the polyvalent alcohols having a molecular weight of 400 or lower. A larger amount is better, and it is most preferable that all the polyvalent alcohol(s) having a molecular weight of 400 or lower be the polyvalent alcohol(s) containing only hydroxyl groups as functional groups and having a molecular weight of 400 or lower.

The polyols used in the present invention preferably further comprise a polyether-based polyol. The polyether-based polyol has a molecular weight exceeding 400. Examples of the polyether-based polyol include polyoxyethylene glycol, polyoxyethylene polyoxypropylene glycol, polyoxyethylene polyoxytetramethylene glycol, and adducts in which one or two or more alkylene oxides are added to a low-molecular weight polyvalent alcohol or a low-molecular weight polyalkylene polyamine, which have molecular weights of higher than 400 but 4000 or lower, and the like. Examples of the low-molecular weight polyvalent alcohol include ethylene glycol, propylene glycol, 1,4-butanediol, trimethylolpropane, pentaerythritol, sorbitol, and the like. Examples of the low-molecular weight polyalkylene polyamine include ethylenediamine, diethylenetriamine, triethylenetetramine, and the like. Examples of the alkylene oxide include ethylene oxide, propylene oxide, butylene oxide, and the like. One of these polyether-based polyols may be used alone, or two or more thereof may be used in combination.

When the polyols used in the present invention further comprise the above-described polyether-based polyol, the ratio of oxyethylene groups relative to all the polyols is preferably 0.5 to 10% by mass, and more preferably 1 to 5% by mass. If the ratio of the oxyethylene groups is lower than the lower limit, a polyurethane resin composition to be obtained tends to have a coarse particle diameter and tends to have an unstable emulsion dispersion state, and the softness, resilient feel, and dyeing durability of a fiber product to be obtained tend to deteriorate. Meanwhile, if the ratio of the oxyethylene groups exceeds the upper limit, properties such as film formability tend to be inferior, and the softness, the resilient feel, and the dyeing durability tend to deteriorate, although a stable emulsion dispersion can be obtained.

In the present invention, another polyol other than the decanediol-derived polycarbonate diol, the polyvalent alcohol having a molecular weight of 400 or lower, and the polyether-based polyol can be used as the polyol in combination. The other polyol has a molecular weight exceeding 400. Examples of the other polyol include high-molecular weight polyols such as polyester-based polyols, and other polycarbonate diols other than the above-described decanediol-derived polycarbonate diols.

The polyester-based polyols include those obtained by a dehydration condensation reaction between a polyvalent alcohol and a polycarboxylic acid, those obtained by a ring-opening polymerization reaction of a cyclic ester compound, those obtained by copolymerization thereof, and the like. Examples of the polyvalent alcohol include ethylene glycol, propylene glycol, 1,3-propanediol, 1,4-butanediol, 1,5-pentanediol, 3-methyl-1,5-pentanediol, 1,6-hexanediol, neopentyl glycol, diethylene glycol, triethylene glycol, tetraethylene glycol, polyethylene glycol having a molecular weight of 300 to 1,000, dipropylene glycol, tripropylene glycol, bis(hydroxyethoxy)benzene, 1,4-cyclohexanedimethanol, bisphenol A, bisphenol S, hydrogenated bisphenol A, hydroquinone, or alkylene oxide adducts thereof, and the like. Examples of the polycarboxylic acid include dimer acids, succinic acid, adipic acid, azelaic acid, sebacic acid, dodecanedicarboxylic acid, maleic anhydride, fumaric acid, 1,3-cyclopentanedicarboxylic acid, terephthalic acid, isophthalic acid, phthalic acid, 1,4-naphthalenedicarboxylic acid, 2,5-naphthalenedicarboxylic acid, 2,6-naphthalenedicarboxylic acid, naphthalic acid, biphenyldicarboxylic acid, 1,2-bis(phenoxy)ethane-p,p'-dicarboxylic acid, anhydrides or ester-forming derivatives of dicarboxylic acids, and the like. Examples of the cyclic ester compound include ε-caprolactone and the like.

The other polycarbonate diols than the above-described decanediol-derived polycarbonate diols are not particularly limited, unless the polycarbonate diols contain a structural unit derived from 1,10-decanediol, and, examples thereof include polycarbonate-based polyols obtained by a reaction of a glycol other than 1,10-decanediol, such as 1,4-butanediol, 1,6-hexanediol, or diethylene glycol, with diphenyl carbonate, phosgene, or the like, and the like.

One of the other polyols may be used alone, or two or more thereof may be used in combination.

[Organic Polyisocyanate]

As the organic polyisocyanate in the present invention, an aliphatic, alicyclic, or aromatic organic polyisocyanate commonly used from the past can be used. Examples of the aliphatic organic polyisocyanate include aliphatic diisocyanate compounds such as tetramethylene diisocyanate, hexamethylene diisocyanate, dodecamethylene diisocyanate, trimethylhexamethylene diisocyanate, and lysine diisocyanate. Examples of the alicyclic organic polyisocyanate include alicyclic diisocyanate compounds such as isophorone diisocyanate, hydrogenated xylylene diisocyanate, 4,4'-dicyclohexylmethane diisocyanate, 3,3'-dimethyl-4,4'-dicyclohexylmethane diisocyanate, and norbornane diisocyanate. Examples of the aromatic organic polyisocyanate include aromatic diisocyanate compounds such as m-phenylene diisocyanate, p-phenylene diisocyanate, 2,4-tolylene diisocyanate, 2,6-tolylene diisocyanate, 4,4'-diphenylmethane diisocyanate, 2,4'-diphenylmethane diisocyanate, 3,3'-dimethyl-4,4'-biphenylene diisocyanate, 3,3'-dichloro-4,4'-biphenylene diisocyanate, 1,5-naphthalene diisocyanate, tolidine diisocyanate, tetramethylene xylylene diisocyanate, and xylylene diisocyanate. One of these organic polyisocyanates may be used alone, or two or more thereof may be used in combination. Of these organic polyisocyanates, hexamethylene diisocyanate, isophorone diisocyanate, and 4,4'-dicyclohexylmethane diisocyanate are preferable in terms of properties of a polycarbonate-based polyurethane resin to be obtained and costs.

[Terminal Isocyanate Group-Containing Urethane Prepolymer]

The urethane prepolymer having an isocyanate group at a terminal used in the present invention (hereinafter, referred to as "terminal isocyanate group-containing urethane prepolymer") is one (a reaction product) obtained by reacting the above-described polyols with the above-described organic polyisocyanate.

A reaction for synthesizing the terminal isocyanate group-containing urethane prepolymer can be conducted by a conventionally known one-shot method (single-stage type) or multi-stage type isocyanate polyaddition reaction method under a condition of a reaction temperature of 40 to 150°C. In this case, it is also possible to add a reaction catalyst such as dibutyltin dilaurate, stannous octoate, dibutyltin di-2-ethylhexoate, triethylamine, triethylenediamine, N-methylmorpholine, or bismuth tris(2-ethylhexanoate), or a reaction inhibitor such as phosphoric acid, sodium hydrogen phosphate, para-toluenesulfonic acid, adipic acid, or benzoyl chloride, if necessary.

In addition, an organic solvent which does not react with isocyanate groups may be added at a reaction stage or after completion of the reaction. Examples of the organic solvent include acetone, methyl ethyl ketone, methyl isobutyl ketone, tetrahydrofuran, dioxane, dimethylformamide, dimethyl sulfoxide, toluene, xylene, ethyl acetate, butyl acetate, methylene chloride, and the like. Of these organic solvents, methyl ethyl ketone, toluene, and ethyl acetate are particularly preferable. Those organic solvents can be removed by heating under reduced pressure after the dispersing of the prepolymer by emulsification and the chain extension thereof.

For producing the terminal isocyanate group-containing urethane prepolymer, the NCO/OH mole ratio during the reaction is preferably in a range of 2.0/1.0 to 1.1/1.0, and more preferably in a range of 1.7/1.0 to 1.25/1.0. In addition, a free-isocyanate group content in the terminal isocyanate group-containing urethane prepolymer at the completion of the reaction is preferably 0.5 to 3.0% by mass. If the free-isocyanate group content is lower than the lower limit, the viscosity during the production tends to be high, and hence a large amount of the organic solvent tends to be required, which is disadvantageous in terms of costs, and the dispersing by emulsification tends to be difficult. Meanwhile, if the free-isocyanate group content exceeds the upper limit, the balance between the emulsification after the dispersing by emulsification and the emulsification after the chain extension with the amine tends to change, so that the storage stability with the lapse of time or the processing stability of a polycarbonate-based polyurethane resin composition to be obtained tends to be poor.

Note that since each of the polyols and the organic polyisocyanate has multiple reactive sites, the structure of the terminal isocyanate group-containing urethane prepolymer obtained by reacting the polyols with the organic polyisocyanate is so complex that the terminal isocyanate group-containing urethane prepolymer cannot be directly expressed by a general formula (structure).

[Dispersing by Emulsification]

In the present invention, the terminal isocyanate group-containing urethane prepolymer is dispersed by emulsification in water. Here, it is possible to use many conventionally commonly used surfactants as an emulsifier. Such surfactants include nonionic surfactants such as alkylene oxide adducts of alcohols having 8 to 24 carbon atoms, alkenols having 8 to 24 carbon atoms, polycyclic phenols, amines having 8 to 44 carbon atoms, amides having 8 to 44 carbon atoms, fatty acids having 8 to 24 carbon atoms, polyvalent alcohol fatty acid esters, fats and oils, and polypropylene glycol (when two or more alkylene oxides are added in a nonionic surfactant, the alkylene oxides may be added by block addition or random addition); anionic surfactant such as anionic derivative of alcohols, alkenols, and various alkylene oxide adducts such as the above-described nonionic surfactants; cationic surfactants such as monoalkyltrimethylammonium salts having 8 to 24 carbon atoms, dialkyldimethylammonium salts having 8 to 24 carbon atoms, monoalkylamine acetic acid salts having 8 to 24 carbon atoms, dialkylamine acetic acid salts having 8 to 24 carbon atoms, and alkylimidazoline quaternary salts having 8 to 24 carbon atoms; and the like. One of those surfactants may be used alone, or two or more thereof may be used in combination.

Of these surfactants, nonionic surfactants are preferable, and alkylene oxide adducts of polycyclic phenols (for example, polyoxyethylene distyrylphenyl ether-type nonionic surfactants, polyoxyethylene polyoxypropylene distyrylphenyl ether-type nonionic surfactants, polyoxyethylene tristyrylphenyl ether-type nonionic surfactants, and polyoxyethylene polyoxypropylene tristyrylphenyl ether-type nonionic surfactants), and Pluronic-type nonionic surfactant are particularly preferable, from the viewpoint of the mixability with other components.

In the present invention, the amount of the emulsifier used is preferably 0.5 to 10 parts by mass, and more preferably 2 to 8 parts by mass relative to 100 parts by mass of the terminal isocyanate group-containing urethane prepolymer. If the amount of the emulsifier used is smaller than the lower limit, the polycarbonate-based polyurethane resin composition tends to have a coarse particle diameter, so that a stable emulsion dispersion state cannot be obtained, and the resilient feel and the dyeing durability of a fiber product to be obtained tend to deteriorate, although the softness thereof is not lowered greatly. Meanwhile, if the amount of the emulsifier used exceeds the upper limit, properties such as film formability tend to be inferior, and the resilient feel and the dyeing durability of a fiber product to be obtained tend to deteriorate, although a stable emulsion dispersion of the polycarbonate-based polyurethane resin composition can be obtained.

In the present invention, the method for dispersing by emulsification is not particularly limited, and it is preferable to mix the emulsifier with the terminal isocyanate group-containing urethane prepolymer or a solution of the terminal isocyanate group-containing urethane prepolymer in an organic solvent, and disperse the terminal isocyanate group-containing urethane prepolymer by emulsification in water by using a homomixer, a homogenizer, or the like. Here, in order to inhibit the reaction of isocyanate groups in the terminal isocyanate group-containing urethane prepolymer with water or the emulsifier as much as possible, it is preferable to conduct the dispersing by emulsification in a temperature range from room temperature to 40°C. It is also preferable to add a reaction inhibitor such as phosphoric acid, sodium hydrogen phosphate, para-toluenesulfonic acid, adipic acid, or benzoyl chloride.

[Chain Extension]

In the present invention, the terminal isocyanate group-containing urethane prepolymer dispersed by emulsification in water as described above is subjected to chain extension by using a polyamine compound containing two or more amino groups of at least one type selected from the group consisting of primary amino groups and secondary amino groups in a single molecule. Such polyamine compounds (chain extenders) include ethylenediamine, tetramethylenediamine, hexamethylenediamine, diethylenetriamine, triethylenetetramine, hydrazine, piperazine, diaminodiphenylmethane, tolylenediamine, xylylenediamine, isophoronediamine, norboranediamine, and the like. The amount of the polyamine compound used is preferably an amount containing 0.8 to 1.2 equivalents of amino groups relative to free isocyanate groups of the terminal isocyanate group-containing urethane prepolymer from the viewpoint of properties and yellowing of a fiber product to be obtained.

In the present invention, the method for the chain extension is not particularly limited, and is preferably a method in which the chain extension is conducted by adding the polyamine to the emulsion dispersion of the terminal isocyanate group-containing urethane prepolymer, or a method in which the chain extension is conducted by adding the emulsion dispersion of the terminal isocyanate group-containing urethane prepolymer to the polyamine. The reaction of the terminal isocyanate group-containing urethane prepolymer with the polyamine compound is completed at a reaction temperature of 20 to 50°C in 30 to 120 minutes after the terminal isocyanate group-containing urethane prepolymer and the polyamine compound are mixed with each other, in general.

[Additives]

The water-dispersible polycarbonate-based polyurethane resin composition of the present invention may comprise various additives such as a film forming aid, a leveling agent, a penetrant, an anti-foaming agent, a solvent, a pigment, an antioxidant, an ultraviolet absorber, a light stabilizer, a hydrolysis inhibitor, a urethane catalyst, a plasticizer, and a pot-life extender, within a range not impairing an effect of the present invention. One of these additives may be used alone, or two or more thereof may be used in combination.

From the viewpoint of ease of handling, the water-dispersible polycarbonate-based polyurethane resin composition of the present invention is preferably used with the resin content adjusted to 5 to 65% by mass (more preferably 10 to 60% by mass).

<Fiber Product>

A fiber product of the present invention is one obtained by treating any of various fiber base materials such as knitted fabrics and nonwoven fabrics with the water-dispersible polycarbonate-based polyurethane resin composition of the present invention by any method such as a padding method, an immersion method, a coating method, or a spray method, followed by drying. The fiber product of the present invention is one in which a polycarbonate-based polyurethane resin derived from the water-dispersible polycarbonate-based polyurethane resin composition is attached to the fiber base material.

The fiber base material used in the present invention is preferably a base material using a polyamide fiber or a polyester fiber, because a fiber product to be obtained by using the water-dispersible polycarbonate-based polyurethane resin composition of the present invention will have a texture and quality similar to those of natural leather.

In addition, when a nonwoven fabric is used as the fiber base material, the thickness of the threads is preferably 2.0 dtex or less from the viewpoint that the texture of a fiber product to be obtained is improved. The density of the nonwoven fabric is preferably 0.2 to 0.7 g/cm$^3$, and more preferably 0.30 to 0.55 g/cm$^3$. If the density of the nonwoven fabric is lower than the lower limit, the wear resistance of a fiber product to be obtained tends to be poor. If a large amount of the polycarbonate-based polyurethane resin is attached in order to compensate this, the texture of a fiber product to be obtained tends to be coarse and hard, and the quality thereof tends to be impaired. Meanwhile, if the density of the nonwoven fabric exceeds the upper limit, the texture of a fiber product to be obtained tends to be coarse and hard, and the quality thereof tends to be impaired.

In addition, a method for the drying is not particularly limited, and examples thereof include air drying and dry-type drying using hot air; wet-type drying using a high-temperature steamer (H .T. S.) or a high-pressure steamer (H. P. S.); microwave irradiation-type drying; and the like. Dry-type drying using hot air is preferable in terms of continuous processability. One of these drying methods may be used alone, or two or more thereof may be used in combination. In addition, when the dry-type drying using hot air is used, it is preferable that the treatment temperature be 60 to 190°C, and the treatment time be 1 to 20 minutes, and it is particularly preferable that the treatment temperature be 100 to 170°C, and the treatment time be 2 to 5 minutes, from the viewpoint of various properties of a fiber product to be obtained.

The fiber product of the present invention is excellent in various strengths such as tensile strength, tear strength, and wear strength. In addition, the fiber product of the present invention is extremely excellent in various aspects of durability such as dyeing durability, light resistance, heat resistance, hydrolysis resistance, oil resistance, washing resistance, and dry-cleaning resistance. Hence, the water-dispersible polycarbonate-based polyurethane resin composition of the present invention is highly valuable for use in the fields of synthetic leather and artificial leather where these various properties are required at high levels and also in the field of use as an industrial material.

The fiber product of the present invention treated with the water-dispersible polycarbonate-based polyurethane resin composition of the present invention has an excellent dyeing durability. Hence, the polyurethane resin attached to the fiber product is not fractured or detached so much after dyeing, and the texture and the resilient feel do not deteriorate so much due to the dyeing. Accordingly, the fiber product of the present invention has sufficiently soft texture and resilient feel even after dyeing.

[Examples]

Hereinafter, the present invention is described more specifically on the basis of Examples and Comparative Examples; however, the present invention is not limited to Examples below. Note that, in Examples and Comparative Examples, "parts" and "%" represent "parts by mass" and "% by mass," respectively, unless otherwise specified.

Hereinafter, methods for measuring properties of urethane prepolymers and polyurethane resin compositions are described below.

<Free-Isocyanate Group Content>

In an Erlenmeyer flask, 0.3 g of an obtained urethane prepolymer was placed, 10 ml of a 0.1 N dibutylamine/toluene solution was mixed, and the urethane prepolymer was dissolved. Subsequently, several drops of a bromophenol blue solution were added, followed by titration with a 0.1 N hydrochloric acid/methanol solution. The free-isocyanate group content NCO% was determined according to the following formula:

$$NCO\% = (a-b) \times 0.42 \times f/x$$

a: The amount of the 0.1 N hydrochloric acid/methanol solution required to titrate 10 ml of the 0.1 N dibutylamine/toluene solution alone.
b: The amount of the 0.1 N hydrochloric acid/methanol solution required to titrate a composition during reaction.
f: The factor of the 0.1 N hydrochloric acid/methanol solution.
x: Amount sampled.

<Resin Content>

The resin content of an obtained polyurethane resin composition was calculated according to the following formula:

$$\text{Amount of resin = amount of all polyols charged}$$
$$\text{+ amount of organic polyisocyanate charged}$$
$$\text{+ amount of chain extender charged}$$

$$\text{Resin content (\%) = amount of resin} \times 100/(\text{total}$$
$$\text{amount of charge - amount of solvent)}.$$

<Viscosity>

After an obtained polyurethane resin composition was heated to 20°C, the viscosity was measured by using a BM- type viscometer ("VISCOMETER" manufactured by TOKYO KEIKI INC., rotor No. 1) at a number of revolutions of 60 rpm.

<Average Particle Diameter>

For an obtained polyurethane resin composition, the cumulative volume particle size distribution was measured by using a laser diffraction/scattering-type particle size distribution measuring apparatus, and the particle diameter (the median diameter) at which the cumulative volume reached 50% was determined and regarded as the average particle diameter d(50) .
In addition, raw materials used in Examples and Comparative Examples are shown below.

(1) Polycarbonate diols containing a structural unit derived from 1,10-decanediol (decanediol-derived polycarbonate diols)

- NL3010DB: a decanediol-derived polycarbonate diol having a number average molecular weight of 3,000 (manufactured by Mitsubishi Chemical Corporation under the trade name of "BENEBiOL™ NL3010DB").
- NL2010DB: a decanediol-derived polycarbonate diol having a number average molecular weight of 2,000 (manufactured by Mitsubishi Chemical Corporation under the trade name of "BENEBiOL™ NL2010DB").

(2) Polyvalent alcohols containing only hydroxyl groups as functional groups and having a molecular weight of 400 or lower (polyvalent alcohols containing only hydroxyl groups and having a molecular weight of 400 or lower)

- Trimethylolpropane (molecular weight: 134).
- 1,4-Butanediol (molecular weight: 90).
- Neopentyl glycol (molecular weight: 104).

(3) Polyether-based polyols

- PR-3007: a polyoxyethylene/polyoxypropylene random copolymer glycol (manufactured by ADEKA under the trade name of "ADEKA POLYETHER PR-3007," number average molecular weight: 3,000, oxyethylene group content: 70%).
- PEG600: polyethylene glycol (molecular weight: 600) .

(4) Other polycarbonate diols

- C-3090: a polycarbonate diol containing structural units derived from 1,6-hexanediol and 3-methyl-1,5-pentanediol (manufactured by KURARAY CO., LTD. under the trade name of "KURARAY POLYOL C-3090," number average molecular weight: 3,000).
- T-6002: a polycarbonate diol containing a structural unit derived from 1,6-hexanediol (manufactured by Asahi Kasei Chemicals Corporation under the trade name of "DURANOL T-6002," number average molecular weight: 2,000).

(5) Polyvalent alcohol containing another functional group and having a molecular weight of 400 or lower

- 2,2'-Dimethylolpropionic acid (molecular weight: 134).

(6) Organic polyisocyanates

- Dicyclohexylmethane diisocyanate.
- Xylylene diisocyanate.

(7) Catalysts

- Bismuth tris(2-ethylhexanoate).
- Dibutyltin dilaurate.

(8) Polyamine compounds each containing two or more amino groups of at least one type selected from the group consisting of primary amino groups and secondary amino groups in a single molecule (chain extenders).

- 20% aqueous solution of piperazine.
- 20% aqueous solution of diethylenetriamine.
- 20% aqueous solution of ethylenediamine.
- 20% aqueous solution of isophoronediamine.

(Example 1)

In a four-necked flask equipped with a stirrer, a reflux condenser, a thermometer, and a nitrogen inlet tube, 76.3 parts of a decanediol-derived polycarbonate diol having a number average molecular weight of 3,000 (manufactured by Mitsubishi Chemical Corporation under the trade name of "BENEBiOL™ NL3010DB") as the decanediol-derived polycarbonate diol, 0.9 parts of trimethylolpropane and 0.9 parts of 1,4-butanediol as the polyvalent alcohols containing only hydroxyl groups and having a molecular weight of 400 or lower, 3.0 parts of a polyoxyethylene/polyoxypropylene random copolymer glycol (manufactured by ADEKA under the trade name of "ADEKA POLYETHER PR-3007," number average molecular weight: 3,000, oxyethylene group content: 70%) as the polyether-based polyol, and 32.8 parts of methyl ethyl ketone as a solvent were weighed and placed. After mixing to uniformity, 17.3 parts of dicyclohexylmethane diisocyanate as an organic polyisocyanate and 0.03 parts of bismuth tris(2-ethylhexanoate) as a catalyst were added, and the reaction was allowed to proceed at 80 ± 5°C for 90 minutes. Thus, a solution of a terminal isocyanate group-containing urethane prepolymer in methyl ethyl ketone was obtained with a free-isocyanate group content in the urethane prepolymer of 1.69%. To this solution, 0.5 parts of sodium dihydrogen phosphate as a reaction inhibitor and 4.4 parts of a polyoxyethylene tristyrylphenyl ether-type nonionic surfactant as an emulsifier were added. After mixing to uniformity, 150 parts of water was gradually added, followed by stirring to disperse the terminal isocyanate group-containing urethane prepolymer by emulsification. To this emulsification dispersion, 6.2 parts of a 20% aqueous solution of piperazine (1.24 parts in terms of piperazine) and 1.9 parts of a 20% aqueous solution of diethylenetriamine (0.38 parts in terms of diethylenetriamine) were added as polyamine compounds (chain extenders) each containing two or more amino groups of at least one type selected from the group consisting of primary amino groups and secondary amino groups in a single molecule, followed by stirring at 40 ± 5°C for 90 minutes. Then, the solvent (methyl ethyl ketone) was removed under reduced pressure at 40°C to obtain a stable water-dispersible polycarbonate-based polyurethane resin composition having a resin content of 40.0%, a viscosity (20°C) of 40 mPa·s, and an average particle diameter of 0.3 μm.

A polyester nonwoven fabric (mass per unit area: 150 g/m$^2$), which was the fiber base material, was subjected to a padding treatment (1 dip-1 nip, pick-up: 100%) with the thus obtained water-dispersible polycarbonate-based polyurethane resin composition. Then, the treated fabric was allowed to stand under an atmosphere of a relative humidity of 60% and a temperature of 90°C to conduct a wet heat coagulation treatment, followed by a dry heat drying treatment at 130°C for 5 minutes. Thus, an undyed fiber product was obtained. The undyed fiber product was dyed under the conditions described below, and then RC soaping was conducted under the conditions described below to obtain a dyed fiber product.

<Dyeing Conditions>

| | | |
|---|---|---|
| Dyeing machine: | MINI-COLOR dyeing machine (manufactured by Texam Giken) | |
| Dyes: | Kayalon Microester Blue DX-LS conc (manufactured by Nippon Kayaku Co., Ltd.) | 0.10% o.w.f. |
| | Kayalon Microester Yellow DX-LS (manufactured by Nippon Kayaku Co., Ltd.) | |
| | | 2.00% o.w.f. |
| | Kayalon Microester Red DX-LS (manufactured by Nippon Kayaku Co., Ltd.) Nippon Kayaku Co., Ltd.) | 0.80% o.w.f. |
| Auxiliary dyeing agent: | NICCA SUNSOLT RM-3406 (manufactured by NICCA CHEMICAL | 0.5 g/L |
| pH adjusting agent: | 90% by mass acetic acid | 0.3 cc/L |
| Bath ratio: | 1/20 | |
| Dyeing temperature and time: | 130°C × 60 minutes (at a rate of temperature rise of 2°C/minutes | |
| | <RC Soaping Conditions> | |
| | sodium hydroxide | 2 g/L |
| RC bath: | hydrosulfite | 2 g/L |
| Bath ratio: | 1/20 | |
| RC temperature and time: | 80°C × 20 minutes (at a rate of temperature rise | |

(Examples 2 to 14 and Comparative Examples 1 to 5)

Polyurethane resin compositions were prepared, and undyed fiber products and dyed fiber products were further prepared in the same manner as in Example 1, except that the types and amounts of the decanediol-derived polycarbonate diol, the polyvalent alcohols each containing only hydroxyl groups and having a molecular weight of 400 or lower, the polyether-based polyol, the other polycarbonate diol, the polyvalent alcohol containing another functional group and having a molecular weight of 400 or lower, the solvent, the organic polyisocyanate, the catalyst, the reaction inhibitor, the emulsifier, water, the chain extenders were changed to those shown in Tables 1 to 4. Note that, 2.2 parts of triethylamine was used for neutralization of 2,2'-dimethylolpropionic acid in Comparative Example 5.

The undyed fiber products and the dyed fiber products obtained Examples and Comparative Examples were examined in terms of texture (softness), resilient feel, and dyeing durability.

(1) Texture (softness)

The texture of each of the obtained fiber products was evaluated based on the tactile impression according to the following criteria. Tables 1 to 4 show the results. In the case of evaluation between grades, such a case was expressed like "1-2".

Grade 6: Extremely soft texture.
Grade 5: Soft texture.
Grade 4: Slightly soft texture.
Grade 3: Slightly coarse and hard texture.
Grade 2: Coarse and hard texture.
Grade 1: Extremely coarse and hard texture.

(2) Resilient feel

The resilient feel of each of the obtained fiber products was evaluated based on the tactile impression according to the following criteria. Tables 1 to 4 show the results. Note that, in the case of evaluation between grades, such a case was expressed like "1-2".

Grade 6: Texture extremely rich in impact resilience.
Grade 5: Texture rich in impact resilience.
Grade 4: Texture slightly rich in impact resilience. Grade 3: Slightly paper-like texture.
Grade 2: Paper-like texture.
Grade 1: Extremely paper-like texture.

(3) Dyeing Durability

A cross-section of each of the obtained fiber products was observed by using a scanning electron microscope, and the state of the polyurethane resin attached was evaluated according to the following criteria. Tables 1 to 4 show the results. Note that, in the case of evaluation between criteria, such a case is expressed like "B-C".

A: Neither detachment nor fracture of the resin was observed.
B: Detachment or fracture was observed in less than 20% of the resin.
C: Detachment or fracture was observed in 20% or more and less than 50% of the resin.
D: Detachment or fracture was observed in 50% or more of the resin.

[Table 1]

| | | Example | | | | |
|---|---|---|---|---|---|---|
| | | 1 | 2 | 3 | 4 | 5 |
| Decanediol-derived polycarbonate diol [g] | NL3010DB | 76.3 | 68.9 | 76.3 | 57.5 | 56.9 |
| | NL2010DB | | | | | |
| Polyvalent alcohol containing only hydroxyl groups and having molecular weight of 400 or lower [g] | Trimethylolpropane | 0.9 | 1.2 | 0.9 | 0.9 | 0.9 |
| | 1,4-Butanediol | 0.9 | 1.0 | 0.9 | 0.9 | 0.9 |
| | Neopentyl glycol | | | | | |
| Polyether-based polyol [g] | PR-3007 | 3.0 | 8.6 | 3.0 | 3.0 | 11.3 |
| | PEG600 | | | | | |
| Other polycarbonate diol [g] | C-3090 | | | | 18.8 | 11.1 |
| | T-6002 | | | | | |
| Polyvalent alcohol containing another functional group and having molecular weight of 400 or lower [g] | 2,2'-Dimethylolpropionic acid | | | | | |

(continued)

| | | Example | | | | |
|---|---|---|---|---|---|---|
| | | 1 | 2 | 3 | 4 | 5 |
| Solvent [g] | Methyl ethyl ketone | 32.8 | 32.8 | 32.8 | 32.8 | 32.8 |
| Organic polyisocyanate [g] | Dicyclohexylmethane diisocyanate | 17.3 | 18.7 | 17.3 | 17.3 | 17.3 |
| | Xylylene diisocyanate | | | | | |
| Catalyst [g] | Bismuth tris(2-ethylhexanoate) | 0.03 | 0.03 | 0.03 | 0.02 | 0.02 |
| | Dibutyltin dilaurate | | | | | |
| Free-isocyanate group content in urethane prepolymer [%] | | 1.69 | 1.83 | 1.69 | 1.69 | 1.69 |
| Reaction inhibitor [g] | Sodium dihydrogen phosphate | 0.5 | 0.5 | 0.5 | 0.5 | 0.5 |
| Emulsifier-disperser [g] | Nonionic surfactant | 4.4 | 4.4 | 9.8 | 4.4 | 9.8 |
| Emulsification water [g] | Water | 138.6 | 138.4 | 133.2 | 138.6 | 133.2 |
| Chain extender [g] | 20% piperazine aq. | 6.2 | 6.6 | 6.2 | 6.2 | 6.2 |
| | 20% diethylenetriamine aq. | 1.9 | 2.0 | 1.9 | 1.9 | 1.9 |
| | 20% ethylenediamine aq. | | | | | |
| | 20% isophoronediamine aq. | | | | | |
| Resin content [%] | | 40 | 40 | 40 | 40 | 40 |
| Viscosity [mPa·s] | | 40 | 40 | 50 | 40 | 50 |
| Average particle diameter [μm] | | 0.3 | 0.2 | 0.2 | 0.3 | 0.2 |
| Ratio of decanediol-derived polycarbonate diol relative to all polyols [%] | | 94.1 | 86.4 | 94.1 | 70.9 | 70.2 |
| Ratio of oxyethylene groups relative to all polyols [%] | | 2.6 | 7.6 | 2.6 | 2.6 | 9.8 |
| Amount of emulsifier relative to 100 parts by mass of urethane prepolymer [parts] | | 4.5 | 4.5 | 10.0 | 4.5 | 10.0 |
| Before dyeing | Texture (softness) | 6 | 5 | 5 | 5 | 5 |
| | Resilient feel | 5 | 5 | 5 | 4 | 4 |
| | Dyeing Durability | A | A | A | A | A |
| After dyeing | Texture (softness) | 6 | 5 | 5 | 5 | 5 |
| | Resilient feel | 5 | 5 | 5 | 4 | 4 |
| | Dyeing Durability | A | A | A | A | A |

[Table 2]

| | | Example | | | | |
|---|---|---|---|---|---|---|
| | | 6 | 7 | 8 | 9 | 10 |
| Decanediol-derived polycarbonate diol [g] | NL3010DB | 40.6 | | 78.1 | 73.8 | 76.5 |
| | NL2010DB | | 75.0 | | | |
| Polyvalent alcohol containing only hydroxyl groups and having molecular weight of 400 or lower [g] | Trimethylolpropane | 0.9 | 0.8 | 0.7 | 0.7 | 0.7 |
| | 1,4-Butanediol | 0.9 | 0.7 | 1.1 | 1.1 | 1.1 |
| | Neopentyl glycol | | | | | |
| Polyether-based polyol [g] | PR-3007 | 3.0 | 3.1 | 1.2 | 5.6 | 2.8 |
| | PEG600 | | | | | |
| Other polycarbonate diol [g] | C-3090 | 35.7 | | | | |
| | T-6002 | | | | | |
| Polyvalent alcohol containing another functional group and having molecular weight of 400 or lower [g] | 2,2'-Dimethylolpropionic acid | | | | | |
| Solvent [g] | Methyl ethyl ketone | 32.8 | 32.8 | 32.8 | 32.8 | 32.8 |
| Organic polyisocyanate [g] | Dicyclohexylmethane diisocyanate | 17.3 | 19.0 | 17.3 | 17.3 | 17.3 |
| | Xylylene diisocyanate | | | | | |
| Catalyst [g] | Bismuth tris(2-ethylhexanoate) | 0.02 | 0.02 | 0.02 | 0.02 | 0.02 |
| | Dibutyltin dilaurate | | | | | |
| Free-isocyanate group content in urethane prepolymer [%] | | 1.69 | 1.55 | 1.69 | 1.69 | 1.69 |
| Reaction inhibitor [g] | Sodium dihydrogen phosphate | 0.5 | 0.5 | 0.5 | 0.5 | 0.5 |
| Emulsifier-disperser [g] | Nonionic surfactant | 4.4 | 4.4 | 4.4 | 4.4 | 2.0 |
| Emulsification water [g] | Water | 138.6 | 139.3 | 138.6 | 138.8 | 141.0 |
| Chain extender [g] | 20% piperazine aq. | 6.2 | 5.2 | 6.2 | 6.2 | 6.2 |
| | 20% diethylenetriamine aq. | 1.9 | 2.1 | 1.9 | 1.9 | 1.9 |
| | 20% ethylenediamine aq. | | | | | |
| | 20% isophoronediamine aq. | | | | | |
| Resin content [%] | | 40 | 40 | 40 | 40 | 40 |
| Viscosity [mPa·s] | | 40 | 50 | 50 | 30 | 30 |
| Average particle diameter [μm] | | 0.3 | 0.3 | 0.8 | 0.2 | 0.5 |
| Ratio of decanediol-derived polycarbonate diol relative to all polyols [%] | | 50.1 | 94.2 | 96.3 | 90.9 | 94.3 |
| Ratio of oxyethylene groups relative to all polyols [%] | | 2.6 | 2.7 | 1.0 | 4.8 | 2.4 |
| Amount of emulsifier relative to 100 parts by mass of urethane prepolymer [parts] | | 4.5 | 4.5 | 4.5 | 4.5 | 2.0 |

(continued)

|  |  | Example | | | | |
|---|---|---|---|---|---|---|
|  |  | 6 | 7 | 8 | 9 | 10 |
| Before dyeing | Texture (softness) | 4 | 5 | 6 | 6 | 6 |
|  | Resilient feel | 4 | 4 | 5 | 5 | 5 |
|  | Dyeing Durability | A | A | A | A | A |
| After dyeing | Texture (softness) | 4 | 5 | 6 | 6 | 6 |
|  | Resilient feel | 4 | 4 | 5 | 5 | 5 |
|  | Dyeing Durability | A | A | A | A | A |

[Table 3]

|  |  | Example | | | |
|---|---|---|---|---|---|
|  |  | 11 | 12 | 13 | 14 |
| Decanediol-derived polycarbonate diol [g] | NL3010DB | 76.5 | 77.0 | 67.3 | 76.3 |
|  | NL2010DB |  |  |  |  |
| Polyvalent alcohol containing only hydroxyl groups and having molecular weight of 400 or lower [g] | Trimethylolpropane | 0.7 | 0.9 | 0.8 | 0.9 |
|  | 1,4-Butanediol | 1.1 | 1.3 | 1.2 | 0.9 |
|  | Neopentyl glycol |  |  |  |  |
| Polyether-based polyol [g] | PR-3007 | 2.8 | 0.6 | 10.8 | 3.0 |
|  | PEG600 |  |  |  |  |
| Other polycarbonate diol [g] | C-3090 |  |  |  |  |
|  | T-6002 |  |  |  |  |
| Polyvalent alcohol containing another functional group and having molecular weight of 400 or lower [g] | 2,2'-Dimethylolpropionic acid |  |  |  |  |
| Solvent [g] | Methyl ethyl ketone | 32.8 | 32.8 | 32.8 | 32.8 |
| Organic polyisocyanate [g] | Dicyclohexylmethane diisocyanate | 17.3 | 18.6 | 18.2 | 17.3 |
|  | Xylylene diisocyana t e |  |  |  |  |
| Catalyst [g] | Bismuth tris(2-ethylhexanoate) | 0.02 | 0.02 | 0.02 | 0.02 |
|  | Dibutyltin dilaurate |  |  |  |  |
| Free-isocyanate group content in urethane prepolymer [%] |  | 1.69 | 1.82 | 1.78 | 1.69 |
| Reaction inhibitor [g] | Sodium dihydrogen phosphate | 0.5 | 0.5 | 0.5 | 0.5 |
| Emulsifier-disperser [g] | Nonionic surfactant | 7.4 | 4.4 | 4.4 | 0.5 |
| Emulsification water [g] | Water | 135.6 | 138.4 | 138.3 | 142.5 |

(continued)

| | | Example | | | |
|---|---|---|---|---|---|
| | | 11 | 12 | 13 | 14 |
| Chain extender [g] | 20% piperazine aq. | 6.2 | 6.6 | 6.5 | 6.2 |
| | 20% diethylenetriamine aq. | 1.9 | 2.0 | 2.0 | 1.9 |
| | 20% ethylenediamine aq. | | | | |
| | 20% isophoronediamine aq. | | | | |
| Resin content [%] | | 40 | 40 | 40 | 40 |
| Viscosity [mPa·s] | | 50 | 30 | 50 | 60 |
| Average particle diameter [μm] | | 0.2 | 0.9 | 0.2 | 0.7 |
| Ratio of decanediol-derived polycarbonate diol relative to all polyols [%] | | 94.3 | 96.5 | 84.0 | 94.1 |
| Ratio of oxyethylene groups relative to all polyols [%] | | 2.4 | 0.5 | 9.4 | 2.6 |
| Amount of emulsifier relative to 100 parts by mass of urethane prepolymer [parts] | | 7.5 | 4.5 | 4.5 | 0.5 |
| Before dyeing | Texture (softness) | 6 | 5 | 5 | 5 |
| | Resilient feel | 5 | 4 | 5 | 5 |
| | Dyeing Durability | A | A | A | A |
| After dyeing | Texture (softness) | 6 | 5 | 5 | 5 |
| | Resilient feel | 5 | 4 | 5 | 5 |
| | Dyeing Durability | A | A | A | A |

[Table 4]

| | | Comparative Example | | | | |
|---|---|---|---|---|---|---|
| | | 1 | 2 | 3 | 4 | 5 |
| Decanediol-derived polycarbonate diol [g] | NL3010DB | | | 90.6 | 80.2 | 80.2 |
| | NL2010DB | | | | | |
| Polyvalent alcohol containing only hydroxyl groups and having molecular weight of 400 or lower [g] | Trimethylolpropane | 0.9 | 1.4 | | | |
| | 1,4-Butanediol | 0.9 | | | | |
| | Neopentyl glycol | | 1.1 | | | |
| Polyether-based polyol [g] | PR-3007 | 3.0 | | | | |
| | PEG600 | | 6.2 | | | |
| Other polycarbonate diol [g] | C-3090 | 76.3 | | | | |
| | T-6002 | | 61.9 | | | |
| Polyvalent alcohol containing another functional group and having molecular weight of 400 or lower [g] | 2,2'-Dimethylolpropionic acid | | | | 3.0 | 3.0 |
| Solvent [g] | Methyl ethyl ketone | 32.9 | 65.6 | 27.0 | 32.8 | 32.8 |

(continued)

| | | Comparative Example | | | | |
|---|---|---|---|---|---|---|
| | | 1 | 2 | 3 | 4 | 5 |
| Organic polyisocyanate [g] | Dicyclohexylmethane diisocyanate | 17.3 | 16.2 | 22.7 | 15.9 | 15.9 |
| | Xylylene diisocyanate | | 11.7 | | | |
| Catalyst [g] | Bismuth tris(2-ethylhexanoate) | 0.02 | | | 0.02 | 0.02 |
| | Dibutyltin dilaurate | | 0.001 | 0.001 | | |
| Free-isocyanate group content in urethane prepolymer [%] | | 1.69 | 2.20 | 3.19 | 1.03 | 1.03 |
| Reaction inhibitor [g] | Sodium dihydrogen phosphate | 0.5 | 0.1 | 0.1 | 0.0 | 0.0 |
| Emulsifier-disperser [g] | Nonionic surfactant | 4.4 | 5.0 | 16.2 | 4.4 | 0.0 |
| Emulsification water [g] | Water | 138.6 | 138.7 | 136.5 | 141.8 | 146.2 |
| Chain extender [g] | 20% piperazine aq. | 6.2 | | | 3.8 | 3.8 |
| | 20% diethylenetriamine aq. | 1.9 | | | 1.2 | 1.2 |
| | 20% ethylenediamine aq. | | 7.8 | | | |
| | 20% isophoronediamine aq. | | | 34.9 | | |
| Resin content [%] | | 40 | 40 | 40 | 40 | 40 |
| Viscosity [mPa·s] | | 30 | 80 | 30 | 50 | 100 |
| Average particle diameter [μm] | | 0.4 | 0.8 | 2.0 | 0.3 | 0.1 |
| Ratio of decanediol-derived polycarbonate diol relative to all polyols [%] | | 0.0 | 0.0 | 100.0 | 96.4 | 96.4 |
| Ratio of oxyethylene groups relative to all polyols [%] | | 2.6 | 8.8 | 0.0 | 0.0 | 0.0 |
| Amount of emulsifier relative to 100 parts by mass of urethane prepolymer [parts] | | 4.5 | 5.1 | 14.3 | 4.4 | 0.0 |
| Before dyeing | Texture (softness) | 3 | 5 | 5 | 3 | 3 |
| | Resilient feel | 1 | 3 | 3 | 5 | 5 |
| | Dyeing Durability | A | A | A | A | A |
| After dyeing | Texture (softness) | 3 | 5 | 3 | 3 | 3 |
| | Resilient feel | 1 | 2 | 2 | 5 | 5 |
| | Dyeing Durability | A | B | C | A | A |

As is apparent from the results shown in Tables 1 to 3, in each of the cases (Examples 1 to 14) where the fiber base material was treated by using the water-dispersible polycarbonate-based polyurethane resin composition of the present invention, an undyed fiber product having a soft texture and resilient feel was obtained. In addition, even when the undyed fiber product was subjected to the dyeing treatment, the soft texture and the resilient feel were retained, and the dyeing durability was also sufficient. Accordingly, it was found that the water-dispersible polycarbonate-based polyurethane resin compositions of the present invention were excellent in film formability, water resistance, and hot-water resistance.

On the other hand, as is apparent from the results shown in Table 4, in each of the cases (Comparative Examples 1 and 2) where the decanediol-derived polycarbonate diol was not used, an undyed fiber product and a dyed fiber product having poorer resilient feel than the undyed fiber products and the dyed fiber products of the present invention (Examples 1 to 14) were obtained. Especially, the undyed fiber product and the dyed fiber product obtained in Comparative Example 1 also had lower softness than the undyed fiber products and the dyed fiber products of the present invention (Examples 1 to 14). In addition, the dyed fiber product obtained in Comparative Example 2 was insufficient also in dyeing durability.

In the case (Comparative Example 3) where the polyvalent alcohol having a molecular weight of 400 or lower was not used, the obtained undyed fiber product and dyed fiber product were poorer in resilient feel than the undyed fiber products and the dyed fiber products of the present invention (Examples 1 to 14). In addition, it was found that the dyed fiber product obtained in Comparative Example 3 had lower softness than the undyed fiber product, and poor in dyeing durability, and that the polyurethane resin composition prepared in Comparative Example 3 was poor in water resistance and hot-water resistance.

In each of the cases (Comparative Examples 4 and 5) where a polyvalent containing hydroxyl groups and a carboxyl group was used as the polyvalent alcohol having a molecular weight of 400 or lower, the obtained undyed fiber product and dyed fiber product were poorer in softness than the undyed fiber products and the dyed fiber products of the present invention (Examples 1 to 14).

[Industrial Applicability]

The water-dispersible polycarbonate-based polyurethane resin composition of the present invention makes it possible to provide a fiber base material with properties such as toughness and excellent heat resistance and hydrolysis resistance, which are characteristics of a polycarbonate-based polyurethane resin, and to provide simultaneously the fiber product with a soft texture having resilient feel, while overcoming the hard texture, which can be said to be a disadvantage of fiber products treated with conventional polycarbonate-based polyurethane resins. In addition, neither fracture nor detachment of the resin due to hot water or a force of crumpling or the like occurs during a dyeing treatment of the fiber product, and a texture having sufficient softness and resilient feel can be provided even after dyeing.

Accordingly, the water-dispersible polycarbonate-based polyurethane resin composition of the present invention is useful as a fiber product-treating agent capable of providing a fiber base material with toughness and excellent heat resistance and hydrolysis resistance and the like, without impairing the soft texture and the resilient feel of the fiber product, and as the like.

**Claims**

1. A water-dispersible polycarbonate-based polyurethane resin composition obtained by chain extension of a urethane prepolymer with a polyamine compound, wherein
   the urethane prepolymer has an isocyanate group at a terminal and is a reaction product of polyols with an organic polyisocyanate,
   wherein the polyols comprise a decanediol-derived polycarbonate diol and a polyvalent alcohol,
   wherein the decanediol-derived polycarbonate diol contains a structural unit derived from 1,10-decanediol, and the polyvalent alcohol contains only hydroxyl groups as functional groups and has a molecular weight of 400 or lower, and
   the polyamine compound contains two or more amino groups of at least one type selected from the group consisting of primary amino groups and secondary amino groups in a single molecule.

2. The water-dispersible polycarbonate-based polyurethane resin composition according to claim 1, wherein
   a ratio of the decanediol-derived polycarbonate diol containing the structural unit derived from 1,10-decanediol relative to all the polyols is 50 to 99% by mass.

3. The water-dispersible polycarbonate-based polyurethane resin composition according to claim 1 or 2, wherein
   the polyols further comprise a polyether-based polyol.

4. The water-dispersible polycarbonate-based polyurethane resin composition according to claim 3, wherein
   a ratio of oxyethylene groups relative to all the polyols is 0.5 to 10% by mass.

5. A fiber product, comprising:

   a fiber base material; and
   a polycarbonate-based polyurethane resin which is attached to the fiber base material and which is derived from the water-dispersible polycarbonate-based polyurethane resin composition according to any one of claims 1 to 4.

6. A method for producing a water-dispersible polycarbonate-based polyurethane resin composition, comprising the steps of:

obtaining a urethane prepolymer having an isocyanate group at a terminal by reacting polyols with an organic polyisocyanate,
wherein the polyols comprise a decanediol-derived polycarbonate diol and a polyvalent alcohol,
wherein the decanediol-derived polycarbonate diol contains a structural unit derived from 1,10-decanediol, and the polyvalent alcohol contains only hydroxyl groups as functional groups and has a molecular weight of 400 or lower;
dispersing the urethane prepolymer in water by emulsification in the presence of an emulsifier; and
subjecting the urethane prepolymer dispersed by emulsification to chain extension with a polyamine compound containing two or more amino groups of at least one type selected from the group consisting of primary amino groups and secondary amino groups in a single molecule.

7. The method for producing a water-dispersible polycarbonate-based polyurethane resin composition according to claim 6, wherein
the polyols further comprise a polyether-based polyol.

8. The method for producing a water-dispersible polycarbonate-based polyurethane resin composition according to claim 6 or 7, wherein
0.5 to 10 parts by mass of the emulsifier is used relative to 100 parts by mass of the urethane prepolymer in the step of dispersing the urethane prepolymer by emulsification.

9. A method for producing a fiber product, comprising the steps of:

producing a water-dispersible polycarbonate-based polyurethane resin composition by the production method according to any one of claims 6 to 8; and
attaching a polycarbonate-based polyurethane resin to a fiber base material by using the water-dispersible polycarbonate-based polyurethane resin composition.

**Patentansprüche**

1. Wasserdispergierbare Polyurethanharzzusammensetzung auf Polycarbonatbasis, erhalten durch Kettenverlängerung eines Urethanpräpolymers mit einer Polyaminverbindung, worin
das Urethanpräpolymer eine Isocyanatgruppe an einem Ende hat und ein Reaktionsprodukt von Polyolen mit einem organischen Polyisocyanat ist,
worin die Polyole ein Polycarbonatdiol, das von Decandiol stammt, und einen polyvalenten Alkohol enthalten,
worin das Polycarbonatdiol, das von Decandiol stammt, eine strukturelle Einheit enthält, die von 1,10-Decandiol stammt, und der polyvalente Alkohol nur Hydroxylgruppen als funktionelle Gruppen enthält und ein Molekulargewicht von 400 oder weniger hat und
die Polyaminverbindung zwei oder mehrere Aminogruppen von zumindest einem Typ, ausgewählt aus der Gruppe, bestehend aus primären Aminogruppen und sekundären Aminogruppen, in einem einzelnen Molekül enthält.

2. Wasserdispergierbare Polyurethanharzzusammensetzung auf Polycarbonatbasis gemäß Anspruch 1, worin ein Verhältnis des Polycarbonatdiols, das von Decandiol stammt, mit der strukturellen Einheit, die von 1,10-Decandiol stammt, in Bezug auf alle Polyole 50 bis 99 Masse-% ist.

3. Wasserdispergierbare Polyurethanharzzusammensetzung auf Polycarbonatbasis gemäß Anspruch 1 oder 2, worin die Polyole weiterhin ein Polyol auf Polyetherbasis enthalten.

4. Wasserdispergierbare Polyurethanharzzusammensetzung auf Polycarbonatbasis gemäß Anspruch 3, worin ein Verhältnis von Oxyethylengruppen in Bezug auf alle Polyole 0,5 bis 10 Masse-% ist.

5. Faserprodukt, enthaltend:

ein Faserbasismaterial und

ein Polycarbonat-basiertes Polyurethanharz, das an das Faserbasismaterial gebunden ist und von der wasserdispergierbaren Polyurethanharzzusammensetzung auf Polycarbonatbasis gemäß einem der Ansprüche 1 bis 4 stammt.

6. Verfahren zur Erzeugung einer wasserdispergierbaren Polyurethanharzzusammensetzung auf Polycarbonatbasis, enthaltend die Schritte:

Erhalt eines Urethanpräpolymers mit einer Isocyanatgruppe an einem Ende durch Reaktion von Polyolen mit einem organischen Polyisocyanat,
worin die Polyole ein Polycarbonatdiol, das von Decandiol stammt, und einen polyvalenten Alkohol enthalten,
worin das Polycarbonatdiol, das von Decandiol stammt, eine strukturelle Einheit enthält, die von 1,10-Decandiol stammt, und der polyvalente Alkohol nur Hydroxylgruppen als funktionelle Gruppen enthält und ein Molekulargewicht von 400 oder weniger hat, Dispergieren des Urethanpräpolymers in Wasser durch Emulgieren in der Gegenwart eines Emulgators und
Durchführen einer Kettenverlängerung mit dem Urethanpräpolymer, dispergiert durch Emulgieren, mit einer Polyaminverbindung, die zwei oder mehrere Aminogruppen von zumindest einem Typ, ausgewählt aus der Gruppe, bestehend aus primären Aminogruppen und sekundären Aminogruppen, in einem einzelnen Molekül enthält.

7. Verfahren zur Erzeugung einer wasserdispergierbaren Polyurethanharzzusammensetzung auf Polycarbonatbasis gemäß Anspruch 6, worin die Polyole weiterhin ein Polyether-basiertes Polyol enthalten.

8. Verfahren zur Erzeugung einer wasserdispergierbaren Polyurethanharzzusammensetzung auf Polycarbonatbasis gemäß Anspruch 6 oder 7, worin 0,5 bis 10 Masseteile des Emulgators in Bezug auf 100 Masseteile des Urethanpräpolymers beim Schritt zum Dispergieren des Urethanpräpolymers durch Emulgieren verwendet werden.

9. Verfahren zur Herstellung eines Faserproduktes, enthaltend die Schritte:

Produktion einer wasserdispergierbaren Polyurethanharzzusammensetzung auf Polycarbonatbasis durch das Produktionsverfahren gemäß einem der Ansprüche 6 bis 8 und
Anhaften des Polyurethanharzes auf Polycarbonatbasis an ein Faserbasismaterial durch Verwendung der wasserdispergierbaren Polyurethanharzzusammensetzung auf Polycarbonatbasis.

## Revendications

1. Composition de résine de polyuréthane à base de polycarbonate hydrodispersable obtenue au moyen d'une extension de chaîne d'un prépolymère d'uréthane avec un composé de polyamine, dans laquelle
le prépolymère d'uréthane présente un groupe isocyanate au niveau d'une extrémité et est un produit de réaction de polyols avec un polyisocyanate organique,
dans laquelle les polyols comprennent un diol de polycarbonate dérivé du décanediol et un alcool polyvalent,
dans laquelle le diol de polycarbonate dérivé du décanediol contient un motif de structure dérivé du 1,10-décanediol, et l'alcool polyvalent contient seulement des groupes hydroxyle en tant que groupes fonctionnels et présente un poids moléculaire de 400 ou moins, et
le composé de polyamine contient au moins deux groupes amino d'au moins un type sélectionné dans le groupe consistant en les groupes amino primaire et les groupes amino secondaire dans une seule molécule.

2. Composition de résine de polyuréthane à base de polycarbonate hydrodispersable selon la revendication 1, dans laquelle
un rapport du diol de polycarbonate dérivé du décanediol contenant le motif de structure dérivé du 1,10-décanediol par rapport à tous les polyols est de 50 à 99 % en masse.

3. Composition de résine de polyuréthane à base de polycarbonate hydrodispersable selon la revendication 1 ou 2, dans laquelle
les polyols comprennent en outre un polyol à base de polyéther.

4. Composition de résine de polyuréthane à base de polycarbonate hydrodispersable selon la revendication 3, dans laquelle
un rapport des groupes oxyéthylène par rapport à tous les polyols est de 0,5 à 10 % en masse.

5. Produit fibreux, comprenant :

   un matériau à base de fibre ; et
   une résine de polyuréthane à base de polycarbonate qui est fixée au matériau à base de fibre et qui est dérivée de la composition de résine de polyuréthane à base de polycarbonate hydrodispersable selon l'une quelconque des revendications 1 à 4.

6. Procédé de production d'une composition de résine de polyuréthane à base de polycarbonate hydrodispersable, comprenant les étapes consistant à :

   obtenir un prépolymère d'uréthane présentant un groupe isocyanate au niveau d'une extrémité en faisant réagir des polyols avec un polyisocyanate organique,
   dans lequel les polyols comprennent un diol de polycarbonate dérivé du décanediol et un alcool polyvalent,
   dans lequel le diol de polycarbonate dérivé du décanediol contient un motif de structure dérivé du 1,10-décanediol, et l'alcool polyvalent contient seulement des groupes hydroxyle en tant que groupes fonctionnels et présente un poids moléculaire de 400 ou moins ;
   disperser le prépolymère d'uréthane dans de l'eau par émulsification en présence d'un agent émulsifiant ; et
   soumettre le prépolymère d'uréthane dispersé par émulsification à une extension de chaîne avec un composé de polyamine contenant au moins deux groupes amino d'au moins un type sélectionné dans le groupe consistant en les groupes amino primaire et les groupes amino secondaire dans une seule molécule.

7. Procédé de production d'une composition de résine de polyuréthane à base de polycarbonate hydrodispersable selon la revendication 6, dans lequel
   les polyols comprennent en outre un polyol à base de polyéther.

8. Procédé de production d'une composition de résine de polyuréthane à base de polycarbonate hydrodispersable selon la revendication 6 ou 7, dans lequel
   de 0,5 à 10 parties en masse de l'agent émulsifiant sont utilisées par rapport à 100 parties en masse du prépolymère d'uréthane au cours de l'étape de dispersion du prépolymère d'uréthane par émulsification.

9. Procédé de production d'un produit fibreux, comprenant les étapes consistant à :

   produire une composition de résine de polyuréthane à base de polycarbonate hydrodispersable au moyen du procédé de production selon l'une quelconque des revendications 6 à 8 ; et
   fixer une résine de polyuréthane à base de polycarbonate à un matériau à base de fibre en utilisant la composition de résine de polyuréthane à base de polycarbonate hydrodispersable.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP HEI10120757 B
- WO 2014104134 A
- US 2015291724 A1
- JP 2014185320 A